# EUROPEAN PATENT APPLICATION

(11) **EP 4 023 474 A1**
(43) Date of publication of application: **06.07.2022**
(21) Application number: 20859292.3
(22) Date of filing: 24.08.2020
(51) Int. Cl.: B60K 6/00, B60K 6/20, B60K 6/22

(54) **WHEEL DRIVE ASSEMBLY FOR A VEHICLE AND VEHICLE FOR TRANSPORTING LOADS AND/OR PASSENGERS**

(30) Priority: 30.08.2019 BR 102019018153
(71) Applicant: IVECO S.P.A., 10156 Torino (IT)
(72) Inventor: PEREIRA LEMOS, José Francivaldo, 35700-187 Sete Lagoas (BR)
(74) Representative: Studio Torta S.p.A.
(86) International application number: PCT/BR2020/050334
(87) International publication number: WO 2021/035320

(57) **Abstract**

The present invention relates to a wheel drive assembly for application in a vehicle, such as for example those provided with hybrid drive systems, the features of which have been designed and developed to allow the simplified, low cost installation of an electric motor individually on the wheel assembly of a vehicle. The present invention relates more particularly to a wheel drive assembly that comprises an electric motor (8) mounted on a casing (7) inside which is arranged a transmission assembly made up of a primary drive shaft (9) that is associated, on one side, with the power output of said electric motor (8) and, on the other side, with a secondary drive shaft (10) that has a toothed end (101) arranged so that it interacts with a ring gear (11) fixed to the wheel hub (4) of the wheel assembly (S).

## Description

### Field of the Invention

The present invention generally relates to a novel wheel drive assembly for a vehicle for transporting loads and/or passengers, which comprises technical, constructive and functional characteristics designed and developed to allow the installation of an electric motor in a simplified manner and with low investment for an individual wheel drive.

The present invention also relates to a vehicle for transporting cargo and/or passengers, such as a truck, bus, van, or even a conventional vehicle, comprising at least one wheel drive assembly installed in one of its wheel assemblies.

### Fundamentals of the Invention

According to the state of the art, and as it should be common knowledge among persons skilled in the art, there are already several models of electric or hybrid vehicles, which comprise a drive assembly powered by at least one electric motor, either dedicated exclusively as a source of energy and power for the wheels of the vehicles, or applied as a complementary source of energy and power to improve working conditions and load capacity. Under these conditions, it is known that the complexity of installation and, consequently, the costs involved for the implementation of this type of technology are significantly high, compromising and making infeasible most projects.

More specifically, in the case of electric motors that are used as the exclusive source of energy and power, it is possible to observe a high cost involved due to the characteristics and specifications required for this type of configuration, since high performance and high capacity motors are required to be able to power all the transmission systems and the wheels of the vehicle. Moreover, in this type of configuration, relatively great complexity in the installation is noted, in view of the number of components, mechanisms and systems required to transfer energy and power to the wheels of the vehicle.

On the other hand, in order to obtain practical and feasible solutions, there are some models of vehicles that are classified as hybrids, and also those that comprise electric motors as a complementary source of energy and, for some more specific cases, it is common that the electric motors are installed individually and close to each wheel of the vehicle to provide a simpler installation with reduced costs. However, despite solving some problems and drawbacks of the prior art, it was found that these installations could still be optimized to ensure a more efficient operation and at the same time maintain the economic feasibility of the project.

More particularly with regard to these configurations in which the electric motor is installed near the wheel of the vehicle, it is observed that the level of complexity of mechanisms, components and structures to obtain a proper and safe installation remains very high, usually requiring highly trained technicians, who are trained and experienced, which ends up, in a way, being reflected in the final costs of the project.

Still, it is worth mentioning that in the case of vehicles for transporting loads or passengers, the effort required by the motors and traction mechanisms are usually even greater than those usually found in passenger cars and small vehicles. In these cases, it is noted that these models with complementary traction are very useful and reveal great potential for implementation, but the solutions developed so far still present cost problems, which, in the great majority of cases, remain very high because of the complexity of the installations, besides using specific parts and components that, naturally, reflect in the value of implementing these solutions.

Therefore, although the solutions known in the prior art do meet some demands, it is observed that the solutions for the wheel drive assemblies present in the prior art, consist of relatively complex arrangements substantially increasing the costs of implementation, making the use of these solutions impractical from the economic point of view. Thus, considering the above, it is possible to affirm that the wheel drive assemblies, especially those configured as complementary sources of energy and power, usually implemented in vehicles for transporting loads and/or passengers lack simple and efficient solutions, but are mainly capable of reducing the costs involved with the manufacture and assembly of the vehicles. The development of the present invention is intended, therefore, to achieve these objectives.

### Description of the Invention

In view of the above scenario, one of the objectives of the present invention is to provide a wheel drive assembly for a vehicle, which is specially designed and developed to obtain a practical and functional solution to the problems, limitations and drawbacks generated by the wheel drive assemblies known in the prior art, as exemplified above.

More particularly, one objective of the present invention is to provide a wheel drive assembly for a vehicle comprising technical, constructive and functional features that simplify the construction of installations of this type of motor propulsion, reducing the costs involved with the manufacture and assembly of said wheel drive assemblies, but especially of vehicles having this type of motor configuration.

Another objective of the present invention is to provide a vehicle for transporting loads and/or passengers comprising at least one wheel drive assembly, as specified above, which is applied to one of its wheel assemblies.

In this way, in view of the foregoing, in order to obtain the above technical and functional objectives and effects, among others, the present invention relates to a new wheel drive assembly for a vehicle, which consists of an electric motor mounted on a casing within which a transmission assembly is arranged comprising a primary drive axle that is associated, on one side, with the power output of said electric motor and, on the other side, in a secondary drive axle that has a toothed end arranged so that it interacts with a ring gear fixed to the wheel hub of the wheel assembly.

According to a particular embodiment of the present invention, the association between said primary and secondary axles occurs through bevel gears positioned at the respective ends of said axles.

Also, according to another embodiment of the present invention, said primary drive axle is arranged vertically while the secondary axle is horizontally positioned inside said casing. More particularly, it is possible for said primary drive axle and said secondary axle to be arranged perpendicularly relative to each other.

According to one embodiment of the present invention, the primary drive axle is supported by bearings arranged on the mounting flange of said electric motor, while the secondary axle is supported by bearings within said casing.

According to another possible embodiment of the present invention, said casing has at least one anchor point which interacts with the brake calliper support of the wheel assembly and, optionally, said anchor point acts adjacent to the axle end of the wheel assembly. In particular, according to the present invention, the casing is fixed by means of anchor points defined next to the brake calliper support and, at the same time, next to the axle end of said wheel assembly.

Additionally, according to a further embodiment of the present invention, said casing is configured to condition a volume of lubricating fluid which is canted with the bearings, the primary and secondary axles with their respective bevel gears, and with the toothed end and the ring gear.

Also, according to a further embodiment of the wheel drive assembly of the present invention, sealing rings are provided installed adjacent to the primary axle bearing, and in the clamping portion near the axle end.

The present invention also relates to a vehicle for transporting loads and/or passengers that has at least one wheel assembly, consisting of at least one wheel hub (R), said wheel assembly comprising a drive assembly as presented above. According to a particular embodiment of the vehicle of the present invention, the wheel drive assembly has an electric motor mounted on a casing, within which is mounted a transmission assembly comprising a primary drive axle which is associated, on one side, with the power output of the electric motor and, on the other side, with a secondary drive axle that has a toothed end coupled to a ring gear fixed to the wheel hub of the wheel assembly.

According to another embodiment of the present invention, the vehicle also has a drive assembly consisting of a combustion engine, a gearbox, a drive axle which, in turn, is connected to a differential that transfers the power generated by the combustion engine to the wheel assemblies that have at least one wheel hub assembly, and at least one of these wheel assemblies of the vehicle comprises a drive assembly as commented above.

According to particular embodiments of the present invention, such a vehicle may be, for example, a truck, bus, van, or conventional small or large passenger vehicle.

### Brief Description of the Drawings

The characteristics, advantages and technical effects of the present invention, as indicated above, will be more adequately understood by a person skilled in the art from the following detailed description, made merely by way of example, without restrictions, of some embodiments of the present invention, and with reference to the attached schematic figures, namely:
Figure 1 shows a schematic side view of a vehicle for transporting loads and/or passengers known in the prior art;

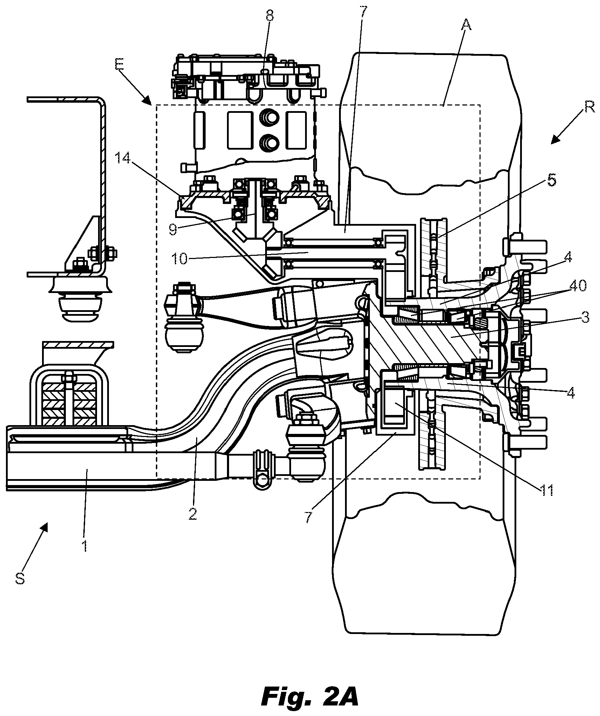

Figure 2A shows a partially sectional rear view of the wheel drive assembly according to the present invention applied to the wheel assembly of a vehicle for transporting loads and/or passengers;

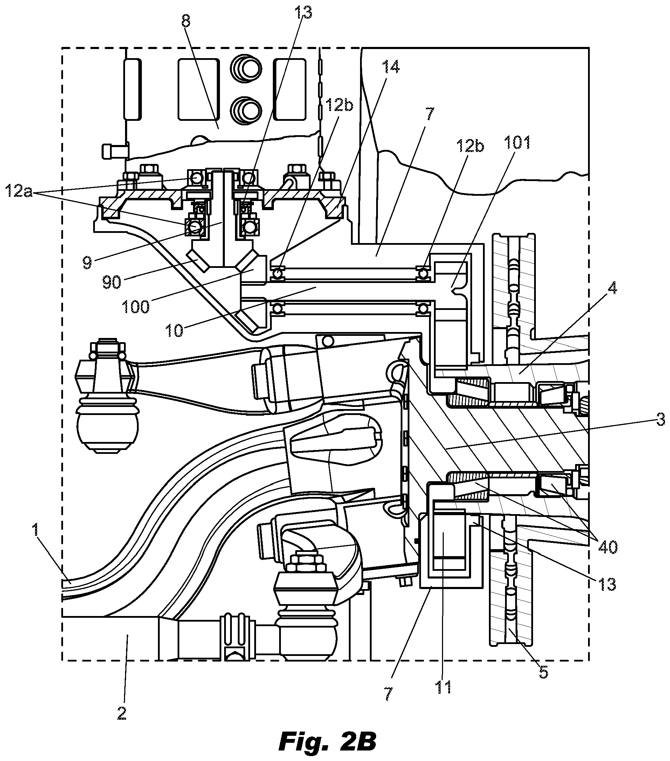

Figure 2B shows an enlarged view of detail A indicated in Figure 2A which illustrates constructional details of the wheel drive assembly according to the present invention; and

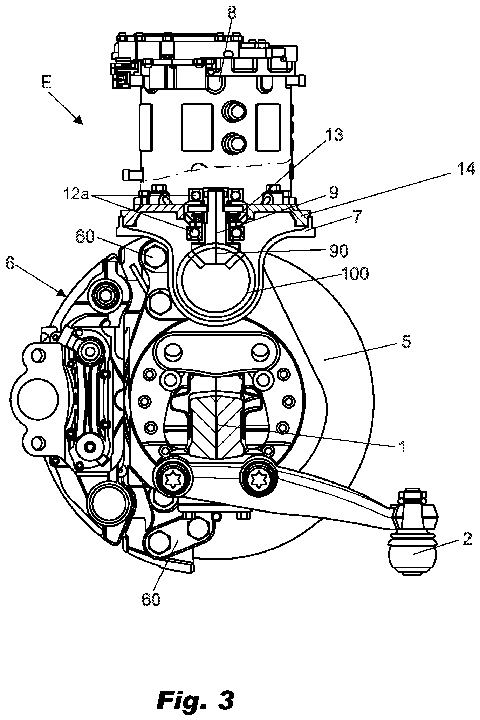

Figure 3 shows a partially sectional side view of the wheel drive assembly according to the present invention.

### Description of Forms of Implementation of the Invention

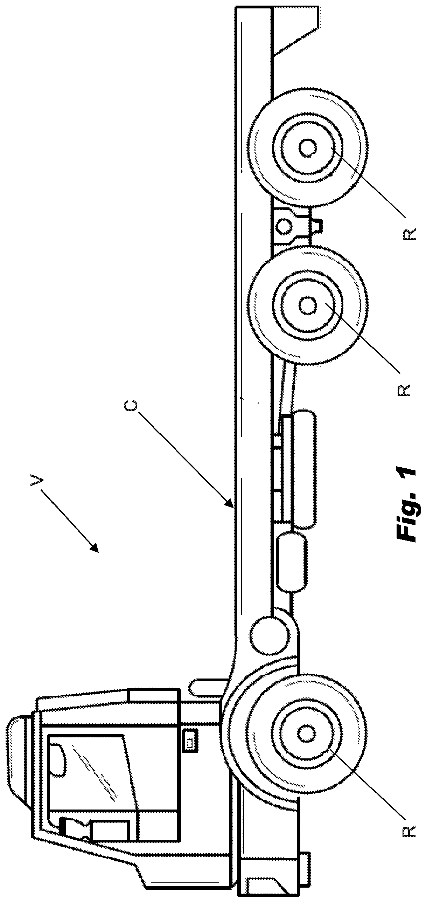

The invention is now described with respect to its particular embodiments by reference to the attached figures showing examples thereof. Such figures are schematic, and their dimensions and/or proportions may not correspond to reality, since they are intended to describe the invention in a didactic manner. The reference numbers indicated in the figures are repeated across the different views to indicate equal or similar technical characteristics. Furthermore, any terms used herein such as: above, below, superior, inferior, lateral, right, left, frontal, posterior and variants thereof should be interpreted according to the guidelines given in Figure 1.

In particular, with respect to the drawings, and by way of illustration only and with the purpose of contextualizing for better understanding of the matter according to the present invention, Figure 1 shows a schematic representation of a vehicle (V), such as those used in the transport of loads and/or passengers. It should be noted that although Figure 1 shows a model of a van, as it should be appreciated by persons skilled in the art, the wheel drive assembly, the subject of the present invention, can be implemented in any type of vehicle, such as for example a truck, bus, passenger vehicle, of whatever size. In this context, the vehicle (V) may consist of at least one main drive assembly (C) comprising a combustion engine as the primary power source, a gearbox, a drive axle which, in turn, is connected to a differential that transfers energy and power to the wheel assemblies supporting the respective wheel hub (R). In each wheel assembly of the vehicle (V), it is possible to install a wheel drive assembly (E), such as the subject of the present invention, which can be configured as an exclusive power source for the vehicle (V) or as a complementary power source for the combustion engine.

Thus, just as an illustration, this vehicle (V) may be, for example, a model known in the prior art, such as those manufactured and marketed by CNH Industrial N.V.

Thus, considering the scope of the present invention, it can be stated that most vehicle models (V) comprise at least four wheel assemblies (S), each of which supports at least one wheel hub (R). These wheel assemblies (S) may present different drive configurations, the most common being those models in which the front or rear assemblies are driven to provide the movement of the vehicle (V).

These wheel assemblies (S) comprise the suspension system elements which are normally fixed to the chassis of the vehicle (V) and consist of a rigid axle 1 responsible for supporting one end of the shock absorber assembly, a stabilizer bar 2 which is installed parallel to the rigid axle 1 and which is responsible for equalizing the transfer of weights between the wheel hubs (R), and axle ends 3 which are arranged at the ends of said rigid axle 1 and where the respective wheel hub 4 through bearings 40 as well as the brake disc 5 together with the respective brake calliper 6 are installed.

Thus, considering the above scenario, and as represented in the other attached figures, the wheel drive assembly (E) according to the present invention consists of an electric motor 8 mounted on a casing 7, within which is mounted a transmission assembly consisting of a primary drive axle 9 which is associated, on one side, with the power output of the electric motor 8 and, on the other side, with a secondary drive axle 10 which in turn has a toothed end 101 that is positioned with a ring gear 11 fixed to said wheel hub 4 of the wheel assembly (S).

In accordance with a particular embodiment of the present invention, said primary drive axle 9 is positioned vertically within said casing 7 and firmly supported by bearings 12a mounted on the mounting flange 14 of the electric motor 8, while said secondary axle 10 is positioned horizontally and is supported by bearings 12b within said casing 7, the association between said primary axle 9 and secondary axle 10 occurring through bevel gears 90 and 100 arranged at their respective ends.

Thus, through this assembly, the wheel drive assembly (**E**)**,** which is the subject of the present invention, is able to transfer the energy and power generated by said electric motor 8 to the wheel hub 4, thereby moving the wheel hub (R).

As briefly mentioned above, said wheel drive assembly (**E**)**,** according to the present invention can be implemented and used as an exclusive source of energy and power for a vehicle wheel assembly (S) (V), but, optionally, and quite advantageously, this wheel drive assembly (**E**) of the present invention can be implemented in the wheel assembly (S) of a vehicle (V) as a complementary source of energy, that is, with the purpose of subsidising, for example, the combustion engine, or even the main electric motor of an electric or hybrid vehicle. In other words, the wheel drive assembly (**E**)**,** according to the present invention, may be implemented as the sole power source of the wheel assembly, or as a complementary power source to assist in driving the vehicle (V).

According to a possible embodiment of the present invention, the wheel drive assembly (**E**) is fixed via the casing 7 which has at least one anchor point that can be next to the support 60 of said brake calliper 6, or next to the axle end 3 and, more particularly, said casing 7 is fixed via anchor points defined next to the support 60 of said brake calliper 6 and, also, next to the axle end 3, ensuring greater stability and safety for the operation of the wheel drive assembly (**E**)**.**

Additionally, according to a further embodiment of the present invention, said casing 7 packs a volume of lubricating fluid to provide for the lubrication and safe cooling of the bearings 12a, 12b, of the primary and secondary axles 9 and secondary axles 10 and their respective bevel gears 90 and 100, as well as of the toothed end 101 and the ring gear 11 to thereby ensure precise and risk-free operation of the present wheel drive assembly (**E**)**.** In this case, the wheel drive assembly (**E**)**,** the subject of the present invention, comprises sealing rings 13 installed, respectively, in the bearing 12a of the primary axle bearing 9 and in the fixing portion near the axle end 3 to thereby prevent leakage of said lubricating fluid.

Also, as commented above, the present invention also relates to a vehicle (V) for transporting cargo and/or passengers, which comprises at least one wheel assembly (S) provided with at least one wheel hub (R), wherein said wheel assembly (S) comprises a drive assembly (**E**) basically consisting of an electric motor 8 which is mounted on a casing 7, within which a transmission assembly is mounted, comprising a primary drive axle 9 which is , on the one side, with the power output of the electric motor 8 and, on the other side, with a secondary drive axle 10 which, in turn, comprises a toothed end 101 coupled to a ring gear 11 fixed to said wheel hub 4 of the wheel assembly (S).

According to a particular embodiment of the present invention, the vehicle (V) also comprises a drive assembly (C) consisting of a combustion engine, a gearbox, a drive axle which, in turn, is connected to a differential that transfers the power generated by the combustion engine to the wheel assemblies (S) with at least one wheel hub (R), wherein at least one of said wheel assemblies of the vehicle (V) comprises a drive assembly (E), as previously described.

More particularly, the vehicle (V) for transporting loads and/or passengers (V), is a truck, bus, van, or even a conventional small or large passenger vehicle.

Thus, as briefly mentioned and, in view of the foregoing, it is important to be clear that the wheel drive assembly (E) can be implemented in vehicles (V) as the exclusive source of power, but can also be installed in conventional vehicles as a source of energy and complementary power to generate additional torque and thus provide significant economic advantages for drivers and transport companies, being ecological for the environment, significantly reducing fuel consumption and, consequently, the emission of pollutant gases.

Finally, in view of all the foregoing, it is important to be clear that the only objective of the present description is to present examples of possible embodiments of the wheel drive assembly to be implemented in vehicles for transporting loads and/or passengers, or any other models and types of vehicles. Therefore, as the persons skilled in the art should understand, several modifications and constructive combinations of equivalent elements are possible without deviating from the scope of protection defined by the attached claims.

## Claims

1. A WHEEL DRIVE ASSEMBLY FOR A VEHICLE, **characterised**by an electric motor (8) mounted on a casing (7) inside which is arranged a transmission assembly made up of a primary drive axle (9) that is associated, on one side, with the power output of said electric motor (8) and, on the other side, with a secondary drive axle (10) that has a toothed end (101) arranged so that it interacts with a ring gear (11) fixed to the wheel hub (4) of the wheel assembly (S).

2. THE WHEEL DRIVE ASSEMBLY FOR A VEHICLE, according to claim 1, **characterised in that** the association between said primary (9) and secondary (10) axles occurs by means of bevel gears (90, 100) arranged at the respective ends of said axles.

3. THE WHEEL DRIVE ASSEMBLY FOR A VEHICLE, according to claim 1, **characterised in that** said primary drive axle (9) is arranged vertically while said secondary axle (10) is positioned horizontally within said casing (7).

4. THE WHEEL DRIVE ASSEMBLY FOR A VEHICLE according to claim 1, **characterised in that** said primary drive axle (9) and said secondary axle (10) are arranged perpendicularly relative to each other.

5. THE WHEEL DRIVE ASSEMBLY FOR A VEHICLE, according to claim 1, **characterised in that** said primary drive axle (9) is supported by bearings (12a) mounted on the mounting flange (14) of said electric motor (8), while said secondary axle (10) is supported by bearings (12b) within said casing (7).

6. THE WHEEL DRIVE ASSEMBLY FOR A VEHICLE, according to claim 1, **characterised in that** said casing (7) comprises at least one anchor point which interacts with the support (60) of said brake calliper (6) of said wheel assembly (S) and, optionally, said anchor point acts adjacent to the axle end (3) of said wheel assembly (S).

7. THE WHEEL DRIVE ASSEMBLY FOR A VEHICLE, according to claim 1, **characterised in that** said casing (7) is fixed by means of anchor points defined adjacent to the support (60) of said brake calliper (6) and, at the same time, adjacent to the axle end (3) of said wheel assembly (S).

8. THE WHEEL DRIVE ASSEMBLY FOR A VEHICLE, according to claim 1, **characterised in that** said casing (7) contains a volume of lubricating fluid which is canted with the bearings (12a, 12b), the primary (9) and secondary (10) axles with their respective bevel gears (90, 100), and with said toothed end (101) and the ring gear (11).

9. THE WHEEL DRIVE ASSEMBLY FOR A VEHICLE, according to claim 1, **characterised in that** it comprises sealing rings (13) installed adjacent to the bearing (12a) of said primary axle (9), and in the fixing portion near the axle end (3).

10. A VEHICLE FOR CARRYING LOADS AND/OR PASSENGERS, which has at least one wheel assembly (S) provided with at least one wheel hub (R), **characterised in that** said wheel assembly (S) comprises a drive assembly (E) as defined in any one of the preceding claims.

11. THE VEHICLE, according to claim 10, **characterised in that** said wheel drive assembly comprises an electric motor (8) mounted on a casing (7), within which is mounted a drive assembly comprising a primary drive axle (9) which is associated, on one side, with the power output of the electric motor (8) and, on the other side, with a secondary drive axle (10) comprising a toothed end (101) cooperatively coupled to a ring gear (11) fixed to the wheel hub (4) of the wheel assembly (S).

12. THE VEHICLE, according to claim 10, **characterised in that** it further comprises a drive assembly (C) comprising a combustion engine, a gearbox, a drive axle which in turn is connected to a differential which transfers the power generated by the combustion engine to the wheel assemblies (S) having at least one wheel hub (R), wherein at least one of said wheel assemblies of the vehicle (V) has a drive assembly (E).

13. THE VEHICLE, according to claim 10, **characterised in that** it is a truck, bus, van, or conventional small or large passenger vehicle.
